# EUROPEAN PATENT APPLICATION

(11) **EP 1 758 012 A2**
(43) Date of publication of application: **28.02.2007**
(21) Application number: 06017492.7
(22) Date of filing: 23.08.2006
(51) Int. Cl.: G06F 3/023

(54) **Succession Chinese character input method**

(30) Priority: 25.08.2005 CN 200510097607
(71) Applicant: Cheng, Yu-Chih, Taipei (TW)
(72) Inventor: Cheng, Yu-Chih, Taipei (TW)
(74) Representative: Helms, Joachim

(57) **Abstract**

A succession Chinese character input method fetches and displays succession Chinese characters relative to an inputted Chinese character from a common succession Chinese character database which is prepared by collecting common succession Chinese characters subject to the characteristic that there is a successive relationship between every two concatenate Chinese characters in a Chinese sentence for succession Chinese character selection. If the desired second Chinese character is not available in the common succession Chinese character database, input this second Chinese character by input device and store it in the self-edited succession Chinese character database in the place corresponding to the inputted first Chinese character for further search. In a further next search from common succession Chinese character database and/or self-edited succession Chinese character database after input of the same first Chinese character, the recently selected succession Chinese character will be displayed on the first place for selection So as to increase the chance of inputting the Chinese characters by selecting Chinese characters from the display screen directly and to achieve a simple, convenient and fast input effect.

## Description

### BACKGROUND OF THE INVENTION

### Field of the Invention:

The present invention relates to an input method and more particularly, to a succession Chinese character input method, which collects phrases to the database of vocabulary by means of utilizing related Chinese characters placed after the inputted Chinese character and is able to automatically add phrases to the database, increasing the chance of finding the desired Chinese character placed after the inputted Chinese character, i.e., increasing the chance of inputting the Chinese characters by selecting desired Chinese characters from the display screen directly, so as to achieve a simple, convenient and fast input effect.

### Description of the Related Art:

Current Chinese input methods used in an electronic device having a display screen such as computer, PDA, cell phone, remote controller, and etc., include individual Chinese character input methods and Chinese phrases input methods. An individual Chinese character input method uses the complicated phonetic alphabet, strokes, or handwriting input method. A Chinese phrases input method is relatively simpler. Chinese phrases include common phrases and specific phrases. Upon input of one Chinese character, some Chinese phrase input methods enable a number of phrases that are initiated from the inputted Chinese character to be displayed on the display screen for selection. There are Chinese phrases input methods that have phrases encoded with codes by means of a particular encoding method. By means of inputting the respective code, the respective phrase is searched. These Chinese phrases input methods reduces the number of individual Chinese character input actions, thereby increasing the input speed. However, because the conventional Chinese phrases input methods still need to input a few individual Chinese characters between phrases to link phrases, the input speed is limited. Further, a person who wishes to use the method of using specific codes to search specific phrases needs to take a special learning course and remember specific codes, or has to go through all phrases to search the desired phrase after input of a code. If the desired phrase is not available after input of a code, the user must input every Chinese characters of the phrase one by one. This procedure is complicated and takes much time to complete. Further, the user needs to make phrases by oneself if they are not in the phrase database. In conclusion, the conventional Chinese input methods are complicated and slow.

### SUMMARY OF THE INVENTION

The present invention has been accomplished under the circumstances in view. It is the main object of the present invention to provide a succession Chinese character input method, which is used in an electronic device having a display screen such as a computer, a cell phone, a PDA, or a home appliance remote controller (for example, remote controller for TV) in order to simplify the input operation of individual Chinese character input so as to improve the input speed. Which collects a lot of phrases to the database of vocabulary by means of utilizing related Chinese characters placed after the inputted Chinese character and is able to automatically add phrases to the database, increasing the chance of finding the desired Chinese character to be placed after the inputted Chinese character, i.e., increasing the chance of inputting the Chinese characters by selecting desired Chinese characters from the display screen directly, so as to achieve a simple, convenient and fast input effect.

To achieve this and other obj ects of the present invention, the succession Chinese character input method using in an electronic device having a display screen and Chinese character input method includes the steps of: fetching related succession Chinese characters from a common succession Chinese character database and/or a self-edited succession Chinese character database and displaying the fetched succession Chinese characters for further next step Chinese character input selection after the input of one Chinese character.

In the aforesaid succession Chinese character input method, each succession Chinese character stored in the common succession Chinese character database is prepared by collecting common succession Chinese characters subject to the characteristic that there is a successive relationship between every two concatenate Chinese characters in a Chinese sentence.

In the aforesaid succession Chinese character input method, each succession Chinese character stored in the self-edited succession Chinese character database is prepared by collecting the inputted succession Chinese character which is automatically stored in self-edited succession Chinese character database for further selection when no succession Chinese character was obtained from the common succession Chinese character database after input of one Chinese character.

The display unit displays fetched succession Chinese characters in one of the methods including: displaying fetched succession Chinese characters in series without space, or displaying fetched succession Chinese characters in series with a space, sign, numeral or alphabet between each two succession Chinese characters, or displaying fetched succession Chinese characters in a two-dimension matrix with coordinates marked by signs, numerals or alphabets, or displaying fetched succession Chinese characters by means of using signs or numerals or alphabets to mark the locations of the characters, or displaying fetched succession Chinese characters by means of dividing into a plurality of pages if the number of succession Chinese characters is too large to be displayed once, or displaying fetched succession Chinese characters by means of any of a variety of other character string displaying methods.

To select the desired succession Chinese character displayed on the display unit by means of keyboard instrument, pointing device, or any of a variety of other character selection methods.

The display unit is to display succession Chinese characters relative to the inputted character in such a manner that the recently selected succession Chinese character of the same inputted character will be displayed on the first place for selection.

The technical measure of the present invention to eliminate the drawbacks of the aforesaid conventional methods is as follows: Prepare a common succession Chinese character database by gathering a certain amount of Chinese writings and sentences and analyzing the writings and sentences to collecting pairs of common succession Chinese characters subject to the characteristic that there is a successive relationship between every two concatenate Chinese characters in a Chinese sentence and subject to the order that the pair of Chinese characters that is more frequently appeared is put at the front side and the pair of Chinese characters that is less frequently appeared is put at the rear side. After input of a first Chinese character, search all available succession characters from the common succession Chinese character database by selector unit and display searched succession Chinese characters on the screen keyboard of display screen for selection by display unit. If the desired second Chinese character is not available in the common succession Chinese character database, input this second Chinese character by input device and store it in the self-edited succession Chinese character database in the place corresponding to the inputted first Chinese character by collector unit so as to automatically add the self-edited succession Chinese character to the self-edited succession Chinese character database for further search. In a further next search after input of the same first Chinese character, the recently selected succession Chinese character will be displayed on the first place for selection subject to the user's habit of use of words and phrases. After input of a second Chinese character, repeat the aforesaid procedure to search the desired third Chinese character, and so on. The more the input Chinese characters are, the more the self-edited succession Chinese characters accumulated in the self-edited succession Chinese character database will be, so as to increase the chance of inputting the Chinese characters by selecting desired Chinese characters from the display screen directly and improve input speed as well.

Thus, during the input process, self-edited succession Chinese characters will be automatically added to the self-edited succession Chinese character database. Therefore, the invention greatly increases the chance of finding the succession Chinese character, and the user can directly select the succession Chinese character from the display screen for input after input of one single Chinese character, thereby improving the input speed. Further, because succession Chinese characters can be directly selected from the display screen for input, the user needs not to memorize succession characters or to input the code of phrase in order to find the words or phrases. In general, the invention simplifies the input operation, and greatly improves the input speed.

### BRIEF DESCRIPTION OF THE DRAWINGS

FIG. 1 is a functional block diagram of an input system for application of a succession Chinese character input method according to the present invention.
FIG. 2 is a succession Chinese character input flow chart of an input system for application of a succession Chinese character input method according to the present invention.
FIG. 3 shows a common phrases or succession Chinese character string appeared on the screen with the input Chinese character " 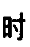 " according to the Example of the present invention.
FIG. 4 corresponds to FIG. 3 showing a list of common phrases or succession Chinese characters following the Chinese character " 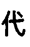 " for selection after selection of the Chinese character " 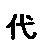 ".
FIG. 5 corresponds to FIG. 4 showing a list of common phrases or succession Chinese characters following the Chinese character " 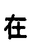 " for selection after selection of the Chinese character " 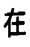 ".
FIG. 6 corresponds to FIG. 5 showing a list of common phrases or succession Chinese characters following the Chinese character " 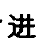 " for selection after selection of the Chinese character " 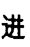 ".
FIG. 7 corresponds to FIG. 6 showing a list of common phrases or succession Chinese characters following the Chinese character " 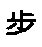 " for selection after selection of the Chinese character " 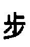 ".
FIG. 8 corresponds to FIG. 3, showing a list of succession Chinese characters following the Chinese character " 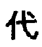 " for selection after selection of the succession Chinese character " 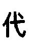 ".
FIG. 9 corresponds to FIG. 8, showing a list of succession Chinese characters following the Chinese character " 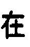 " for selection after selection of the succession Chinese character " 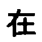 ".
FIG. 10 corresponds to FIG. 3, shows a list of succession Chinese characters appeared in such an order that the succession Chinese character " 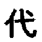 " is at the first place for selection after a secondary input of the Chinese character " 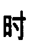 ".

100. input first Chinese character,
110. recognition unit judges if automatically produced succession Chinese characters are available in self-edited succession Chinese character database,
120. selector unit picks up the group of succession Chinese characters related to the inputted first Chinese character from the common succession Chinese character database and displays by display unit,
130. desired succession Chinese character is obtained,
140. keep searching the succession Chinese character corresponding to the second Chinese character,
150. use the input device to input the second Chinese character,
160. collector unit stores the second Chinese character in the self-edited succession Chinese character database corresponding to the first Chinese character,
170. pick up all available succession Chinese characters from the common succession Chinese character database and the self-edited succession Chinese character database and display the succession Chinese characters on the display unit for selection of the desired second Chinese character,
200. list succession Chinese characters on display screen.

21. Input device, 22. recognition unit, 23. selector unit, 24. collector unit, 25. display unit, 26. common succession Chinese character database, 27. self-edited succession Chinese character database, 28. editor unit, and 29. screen keyboard.

### DETAILED DESCRIPTION OF THE PREFERRED EMBODIMENT

The invention can be carried out in different embodiments. However, various modifications and enhancements may be made without departing from the spirit and scope of the invention. Any modifications or similar arrangements and procedures are included in the scope of the appended claims and should be accorded the broadest interpretation so as to encompass all such modifications and similar arrangements and procedures.

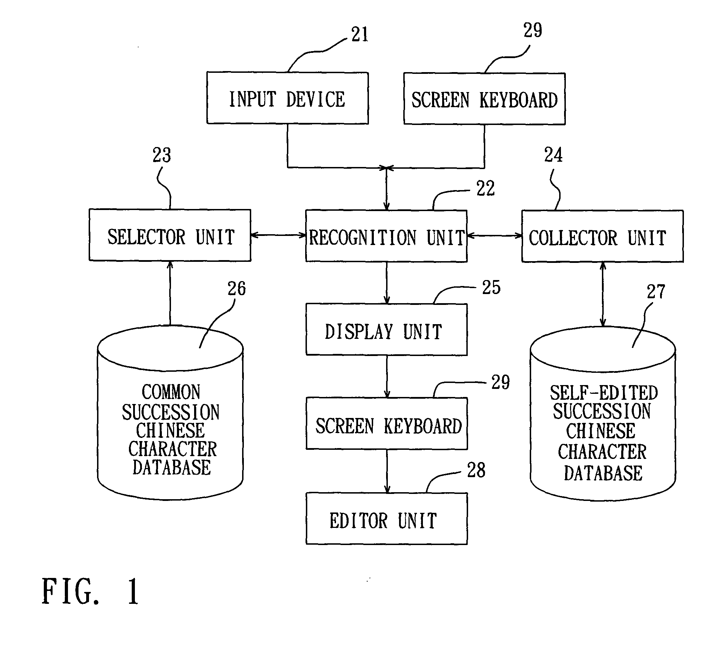

Referring to FIG. 1, an input system for application of a succession Chinese character input method according to the present invention is shown used in an electronic device having a display screen. The electronic device can be a computer, a cell phone, a PDA, or a home appliance remote control**ler** (for example, remote control**ler** for TV). The input system comprises an input device **21** for Chinese character input, a recognition unit **22** for recognition of succession Chinese character, a selector unit **23** for selection of related common succession Chinese characters from database, a collector unit **24** for collecting related succession Chinese characters to a self-edited succession Chinese character database, a display unit **25** for display of Chinese characters on the screen, a common succession Chinese character database **26,** a self-edited succession Chinese character database **27,** an editor unit **28,** and a screen keyboard **29.**

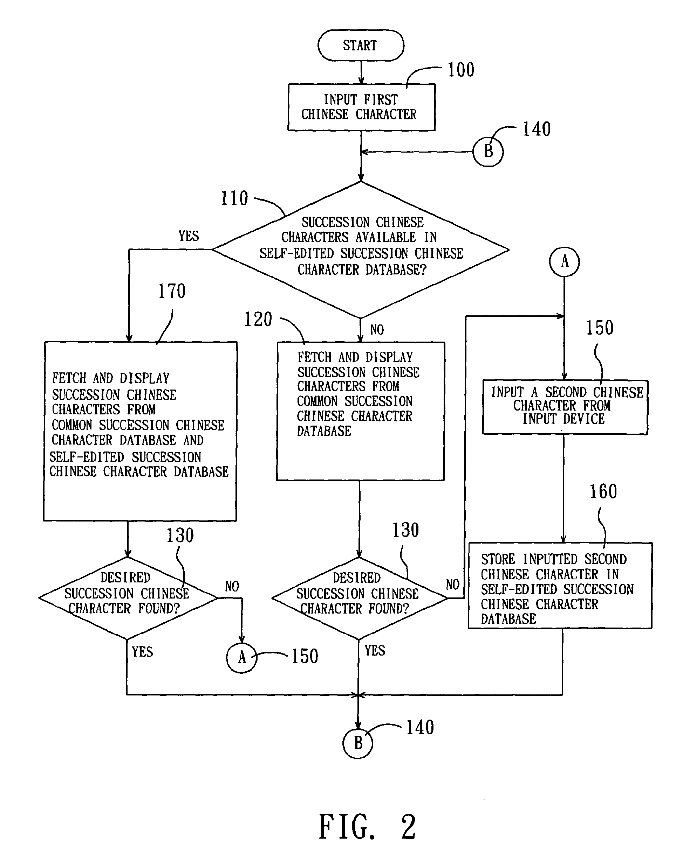

FIG. 2 is a Chinese character input processing flow chart of the present invention. Referring to FIGS. 1 and 2, when inputted a first Chinese character through the input device **21** (Step 100), the recognition unit **22** judges if automatically produced succession Chinese characters are available in the self-edited succession Chinese character database **27** (Step 110). If succession Chinese characters are not available, go to the selector unit **23** to pick up the group of succession Chinese characters related to the inputted first Chinese character from the common succession Chinese character database **26** for display on the screen keyboard 29 by display unit **25** (Step 120). When the desired succession Chinese character obtained (Step 130), complete this input and keep searching the succession Chinese characters of the second Chinese character (Step 140). If the desired succession Chinese character is not available in the common succession Chinese character database **26** after input of the fist Chinese character, use the input device **21** to input the second Chinese character (Step 150) and at the same time, the collector unit **24** stores this second Chinese character in the self-edited succession Chinese character database **27** corresponding to the first Chinese character (Step 160) and then returns to (Step 140) to search the succession Chinese characters of the second Chinese character. If the recognition unit **22** judges that the self-edited succession Chinese character database **27** of the collector unit 24 have succession Chinese characters corresponding to the inputted first Chinese character, pick up all available succession Chinese characters from the common succession Chinese character database **26** of the selector unit 23 and the self-edited succession Chinese character database **27** of the collector unit 24 and display the succession Chinese characters on the screen keyboard 29 by display unit **25** for selection of the desired second Chinese character (Step 170). This input procedure is completed when the desired succession Chinese character is obtained (Step 130). Thereafter, proceeds to (Step 140) to search the succession Chinese character corresponding to the inputted second Chinese character. Otherwise use the input device **21** to input the second Chinese character if the succession Chinese character is not found at this time (Step 150), and then the collector unit 24 automatically store this second Chinese character in the self-edited succession Chinese character database **27** at the place corresponding to the inputted first Chinese character (Step 160) to complete this input procedure, and then keep searching the succession Chinese character corresponding to this second Chinese character (Step 140).

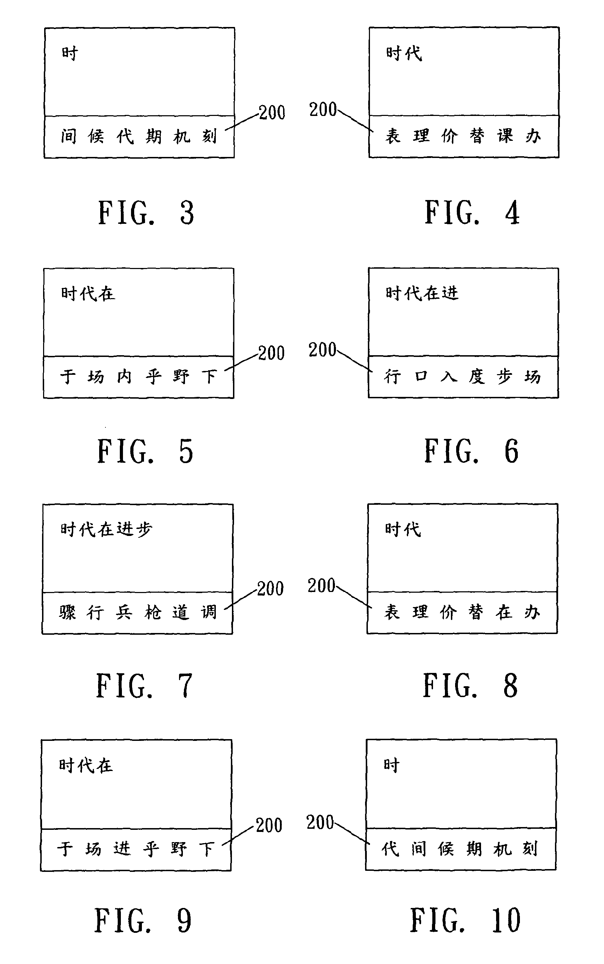

Referring to FIGS. 3~10, which is the example for the invention, when inputting the sentence " 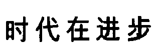 " in which " 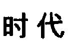 " and " 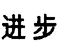 " are common Chinese phrases, the related existing input technique is as follows:
1. Input " 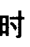 ", and then list common Chinese phrases having the initial " 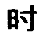 " (200), as shown in FIG. 3;
2. Select " 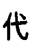 " from the bottom row of Chinese characters (200) in FIG. 3 to complete the input of the common Chinese phrase " 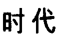 ", and then list common Chinese phrases having the initial " 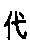 " (200), as shown in FIG. 4;
3. Because " 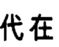 " is not a common Chinese phrase, the Chinese character " 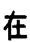 " cannot be found in the bottom row of Chinese characters (200) in FIG. 4, and the Chinese character " 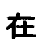 " must be separately inputted as shown in FIG. 5, and in the same way, list common Chinese phrases having the initial " 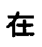 " (200) as shown in FIG. 5;
4. Because " 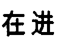 " is not a common Chinese phrase, the Chinese character " 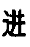 " cannot be found in the bottom row of Chinese characters (200) in FIG. 5, and the Chinese character " 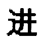 " must be separately inputted as shown in FIG. 6, and in the same way, list common Chinese phrases having the initial " 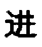 " (200) as shown in FIG. 6; and
5. Select " 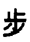 " from the bottom row of Chinese characters (200) in FIG. 6 to complete the input of the common Chinese phrase " 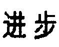 ", and then list common Chinese phrases having the initial " 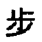 " (200) to complete the input as shown in FIG. 7.

According to the aforesaid conventional technique, it needs to perform complicated individual Chinese character input procedure three times and input procedure by simply display screen selection two times.

According to the present invention, the Chinese phrases " 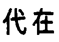 " and " 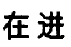 " have been stored in common succession Chinese character database 26 or automatically added to the self-edited succession Chinese character database 27, therefore the input procedure is greatly simplified as follow:
1. Input " 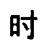 ", and then list the related succession Chinese characters corresponding to " 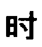 " (200), as shown in FIG. 3;
2. Select " 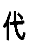 " from the bottom row of succession Chinese characters (200) in FIG. 3 to complete the input of " 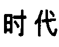 ", and then list the related succession Chinese characters corresponding to " 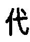 " (200), as shown in FIG. 8;
3. Select " 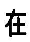 " from the bottom row of succession Chinese characters (200) in FIG. 8 to complete the input of " 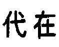 ", and then list the related succession Chinese characters corresponding to " 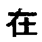 " (200) as shown in FIG. 9;
4. Select " 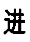 " from the bottom row of succession Chinese characters (200) in FIG. 9 to complete the input of " 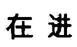 ", and then list the related succession Chinese characters corresponding to " 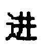 " (200) as shown in FIG. 6; and
5. Select " 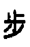 " from the bottom row of Chinese characters (200) in FIG. 6 to complete the input of " 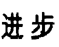 ", and then list the related succession Chinese characters having the initial " 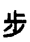 " (200) to complete the input as shown in FIG. 7.

Further, in order to improve the succession Chinese character selection efficiency, the ever selected succession Chinese character will be appeared on the first place in the list of related succession Chinese characters after input of the same related Chinese character as shown in FIG. 3 and FIG. 10 Chinese character " 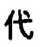 ".

Display unit displays fetched succession Chinese characters in one of the methods including: displaying fetched succession Chinese characters in series without space, or displaying fetched succession Chinese characters in series with a space, sign, numeral or alphabet between each two succession Chinese characters, or displaying fetched succession Chinese characters in a two-dimension matrix with coordinates marked by signs, numerals or alphabets, or displaying fetched succession Chinese characters by means of using signs or numerals or alphabets to mark the locations of the characters, or displaying fetched succession Chinese characters by means of dividing into a plurality of pages if the number of succession Chinese characters is too large to be displayed once, or displaying fetched succession Chinese characters by means of any of a variety of other character string displaying methods.

The succession Chinese character selection items of " 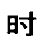 " in this example according to the present invention can be displayed in many different ways as follows:

| | |
|---|---|
| Serial arrangement of related succession Chinese characters without space | 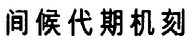 |
| Serial arrangement of related succession Chinese characters with a space between each two characters | 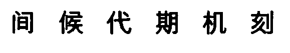 |
| Serial arrangement of related succession Chinese characters with a sign between each two characters | 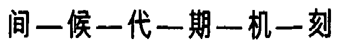 |
| Serial arrangement of related succession Chinese characters that are spaced from one another by numerals | 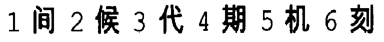 |
| Serial arrangement of related succession Chinese characters that are spaced from one another by alphabets | 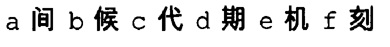 |
| Two-dimensional arrangement of related succession Chinese characters marked with numerical coordinates | 1 2 3 4 5 6 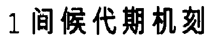 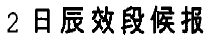 |
| Two-dimensional arrangement of related succession Chinese characters marked with coordinates by signs and alphabets | A B C D E F 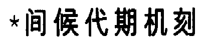 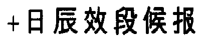 |
| Related succession Chinese characters respectively marked with signs to indicate the respective locations | 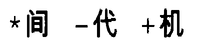 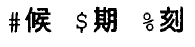 |
| Related succession Chinese characters respectively marked with numerals to indicate the respective locations | 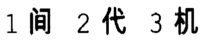 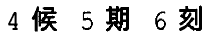 |
| Related succession Chinese characters respectively marked with alphabets to indicate the respective locations | 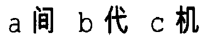 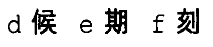 |
| Related succession Chinese characters displayed by pages | |
| (Page 1) | 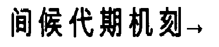 |
| (Page 2) | 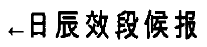 |
| Other succession Chinese character series display method | |

In comparison with the aforesaid conventional input technique, the invention completes the input by means of one complicated individual Chinese character input procedure and input procedure by simply display screen selection four times. Obviously, the invention shows great speed improvement compared with the aforesaid conventional input technique

## Claims

1. A succession Chinese character input method used in a Chinese character input system for electronic device comprised of an input device for Chinese character input, a recognition unit for recognition of succession Chinese character, a selector unit for selection of related common succession Chinese characters from common succession Chinese character database, a collector unit for collecting related succession Chinese characters to self-edited succession Chinese character database, a display unit for display of Chinese characters on the screen, a common succession Chinese character database, a self-edited succession Chinese character database, and a screen keyboard, the succession Chinese character input method comprising the steps of:
(a) using said input device to input a Chinese character;
(b) said recognition unit judges if collector unit automatically produced succession Chinese characters are available in said self-edited succession Chinese character database;
(c) if succession Chinese characters are not available in said self-edited succession Chinese character database, go to said selector unit to pick up the group of succession Chinese characters related to the inputted first Chinese character from said common succession Chinese character database for display on said screen keyboard of said display unit for selection of the desired succession Chinese character, or proceed to step (g) if succession Chinese characters are available in said self-edited succession Chinese character database;
(d) when the desired succession Chinese character is obtained, complete this input and keep searching the succession Chinese characters of the second Chinese character;
(e) if the desired succession Chinese character is not available in said common succession Chinese character database after input of the fist Chinese character, use said input device to input a second Chinese character;
(f) said collector unit automatically stores this second Chinese character in said self-edited succession Chinese character database corresponding to the first Chinese character, complete this input and then return to step (b);
(g) pick up all available succession Chinese characters from said common succession Chinese character database by selector unit and said self-edited succession Chinese character database by collector unit corresponding to the inputted first Chinese character and display the succession Chinese characters on said screen keyboard by said display unit for selection of the desired second Chinese character;
(h) this input procedure is completed if the desired succession Chinese character is obtained and then return to step (b); and
(i) return to step (e) if the succession Chinese character is not found.

2. The succession Chinese character input method as claimed in claim 1, wherein each succession Chinese character stored in said common succession Chinese character database is prepared by collecting common succession Chinese characters subject to the characteristic that there is a successive relationship between every two concatenate Chinese characters in a Chinese sentence; each succession Chinese character stored in said self-edited succession Chinese character database is prepared by collecting the inputted succession Chinese character which is automatically stored in self-edited succession Chinese character database for further selection when no succession Chinese character was obtained from said common succession Chinese character database after input of one Chinese character.

3. The succession Chinese character input method as claimed in claim 1, wherein said display unit displays fetched succession Chinese characters in one of the methods including: displaying fetched succession Chinese characters in series without space, or displaying fetched succession Chinese characters in series with a space, sign, numeral or alphabet between each two succession Chinese characters, or displaying fetched succession Chinese characters in a two-dimension matrix with coordinates marked by signs, numerals or alphabets, or displaying fetched succession Chinese characters by means of using signs or numerals or alphabets to mark the locations of the characters, or displaying fetched succession Chinese characters by means of dividing into a plurality of pages if the number of said characters is too large to be displayed once, or displaying fetched succession Chinese characters by means of any of a variety of other character string displaying methods.

4. The succession Chinese character input method as claimed in claim 1, wherein said select the desired succession Chinese character displayed on said display unit by means of keyboard instrument, pointing device, or any of a variety of other character selection methods.

5. The succession Chinese character input method as claimed in claim 1, wherein said display unit is to display succession Chinese characters relative to the inputted character in such a manner that the recently selected succession Chinese character of the same inputted character will be displayed on the first place for selection.
